Europäisches Patentamt

European Patent Office

Office européen des brevets

(11) Publication number: **0 194 282**
**B1**

(12) **EUROPEAN PATENT SPECIFICATION**

(45) Date of publication of patent specification: **05.09.90**

(21) Application number: **85904438.0**

(22) Date of filing: **15.08.85**

(86) International application number:
**PCT/EP85/00417**

(87) International publication number:
**WO 86/01376 13.03.86 Gazette 86/06**

(51) Int. Cl.⁵: **A 23 G 3/02, A 23 G 3/00**

(54) **A HARD GASIFIED SWEET (CANDY) WITH A SPHERICAL SHAPE OR ANY OTHER REGULAR OR IRREGULAR SHAPE, INCORPORATING OR NOT INCORPORATING A STICK AND THE PROCESS FOR ITS PREPARATION.**

(30) Priority: **31.08.84 GB 8422003**

(43) Date of publication of application:
**17.09.86 Bulletin 86/38**

(45) Publication of the grant of the patent:
**05.09.90 Bulletin 90/36**

(84) Designated Contracting States:
**AT BE CH DE FR GB IT LI LU NL SE**

(56) References cited:
**DE-A-2 823 320**
**FR-A-1 573 397**
**US-A-2 197 919**
**US-A-3 012 893**
**US-A-3 580 456**
**US-A-4 262 029**
**US-A-4 271 206**
**US-A-4 273 793**

(73) Proprietor: **ZETA ESPACIAL S.A.**
**Poligono Industrial Las Salinas calle Valencia, 6**
**Sant Boi de Llobregat (Barcelona) (ES)**

(72) Inventor: **FABBRO, Oreste**
**174 Forest Drive**
**Lytham, Lancashire FY8 4QG (GB)**

(74) Representative: **Pozzoli, Giuliano et al**
**e/o ENGIMPEX S.A. Industrial Property Services**
**Dept. P.O. Box 12**
**CH-6924 Lugano-Sorengo (CH)**

**Description**

The present invention relates to hard gasified sweets (candies) which have different shapes and are or not attached to a stick made of plastic or any other material; when the sweet in question is consumed, it produces inside the mouth a characteristic fizzing action which is uniform and continuous, but without producing cracking intense enough to break the piece of confection attached or not attached to the stick.

The invention forming the subject also relates to a process and system for manufacturing pieces of gasified sweet incorporating a stick, which produce entertaining cracking sounds in the mouth and are spherical, regular or irregular in shape, the formation of the process and system being achieved with conventional machines subjected to certain pressures greater than atmospheric pressure.

The successive stages of the process take place continuously inside pressurised containers, from the instant when the molten and gasified caramel mass is present in the initial container until the instant when the gasified sweet with a stick is completely crystallised, its internal temperature being below 30°C.

US—A—1,384,319 already describes the introduction of carbon dioxide or of an inert gas into a caramel mass precisely at the moment in which the mass in question is hot and in the liquid phase, so that the sweet when cold, i.e. after cooling, has a lower specific weight and so that the flavouring is more intense due to the release of the carbon dioxide gas bubbles saturated with the flavouring.

US—A—2,082,313 discloses gasification of a novel caramel mass, to which products which lower the melting point have been added (cocoa, milk, fatty acids, etc.).

Gasification of the caramel so as to create a cellular structure is achieved using a gas which is at a pressure below, the same as, or above atmospheric pressure.

US—A—2,600,596 is one of the most important prior patents since it describes the manufacturing process for "Marshmallows", which are very well known worldwide, involving gasification of a caramel mass under a pressure higher than atmospheric pressure, together with stirring.

Once all the gas has been introduced (in the form of small bubbles), the reacting container is depressurised, which is why the gas occluded inside the mass is released, thereby giving rise to a spongy sweet.

Using the system described in the abovementioned patent, it is possible to obtain two very different products, depending on the composition of the mass used: in the case where use is made of a soft mass which has only a low capacity for retaining the occluded gas, and once the caramel mass has been gasified with a gas at a pressure above atmospheric pressure, depressurisation is performed. The occluded gas in the form of small bubbles will expand so as to form a large number of bubbles inside the mass; at the same time a large quantity of gas is released and, as a result, the caramel acquires a spongy appearance.

In the case where the gasification in question is performed using a hard caramel mass which, after cooling, will have a surface tension which can prevent the gas escaping externally, a product with different characteristics is obtained since the occluded gas breaks the protective film, making a small popping noise similar to (but a lot louder than) the popping produced by the bursting of bubbles in a refreshing, gasified, lemonade drink.

US—A—3,012,893 which published in 1961 and describes the gasification of a candy which is hard and which, for this reason, is able to retain the occluded gas: when put in the mouth, it makes characteristic popping noises throughout the time taken for it to dissolve, on account of the occluded gas being released.

A comparison could be made between the popping or cracking described in the abovementioned patent and the noises or small explosions produced by the drifting icebergs of the North Pole which are made of completely pure and uncontaminated water since the ice was formed many thousands of years ago and which have trapped inside them small air bubbles subjected to very high pressures: an ice cube in a glass containing a drink at room temperature will release the occluded gas, producing similar noises.

US—A—3,012,893 only enables randomly sized pieces to be obtained, so that those of sufficient size will be offered for sale while the remainder constitute waste.

US—A—4,262,029 forestalls such a disadvantage by yielding pieces of an approximately specified size.

FR—A—1,573,397, Unilever N.V., relates to the production of the stinging effect in the mouth as a result of chemical reaction of an acid (citric or tartaric) wich a carbonate, whereby $CO_2$ is formed, whereas the subject of what is claimed here is a sweet in which an occlusion of $CO_2$ is produced in the phase in which the sweet is in the liquid stage from which it is to be cooled immediately, all of this being performed in a pressurised environment. The gas thus remains occluded in the caramel mass.

The hissing sensation obtained by rupturing the surface layers or films of the sweet, when it is placed in the mouth, is completely different from the effervescence produced by the chemical reaction in which carbon dioxide is formed.

Different and sophisticated mechanical systems can be developed so as to enable moulding of a gasified sweet incorporating a plastic stick; however, this would involve a very high degree of risk since the plants consist of unique models which are designed especially so as to be able to withstand high pressures and which are very expensive. The simplest system consists precisely in moulding where certain cavities or moulds are filled with a gasified caramel mass when the latter or the confectionary solution has a paste-like consistency; beforehand, a plastic stick is introduced into the groove of the mould so that it is embedded in the middle of the mass.

US—A—4,273,793 relates to a process of manufacture by injection moulding the carbonated caramel

2

mass, wherein the moulds are pre-pressurised in order to prevent the escape of the gas from the carbonated sweet.

This process, however, in addition to not being able to be carried out continuously in practice, or at least not in an economical form, but only in a discrete or semi-continuous form, presents problems which are not inconsiderable as regards the high cost of the moulds and of the labour required by the process.

To this must be added the cost of the residues of caramel material lost in the interconnections between the moulds, and the waste due to the breakage of a high percentage of pieces which break as they are removed from the moulds. For this reason, if it is wished to increase the rate of production or augment production with this process, the only solution is to employ a large number of moulds and a large amount of labour, the prospect otherwise being a small output and slow rate of production, with idle periods (cooled down) between one melting and the next.

On the other hand, a high number of moulds and an investment consisting of labour assigned to the task will result in an excessive and uncompetitive cost.

In one form or another, the process hence offers a very low yield, and is consequently not profitable.

It may be added that, to change the shape of the sweet, the moulds have to be changed every time.

US—A—4,262,029 (Figs. 1 and 2) relates to a process for producing sweets by depositing in cavities placed on a conveyor belt, where they are successively cooled and unloaded to be prepared for use.

This process also has the same disadvantages of being discrete or at most semi-continuous, and to obtain a high output an excessively long conveyor belt is required, with a large number of moulds thereon and with a powerful cooling system, which involves considerable costs.

Otherwise, that it is to say in practice, the process can only be slow (limitation in the sizes of the conveyor belt, the cooling system and the number of moulds) and of low profitability.

Furthermore, by depositing the molten caramel mass in the cavities, not all the desired shapes can be obtained and, in any case, any shape which is produced will be flattened or smooth on the side which remains free in the cavity (molten material tends to loose its shape).

The use of injection moulds to solve this problem might suggest itself, but this would involve the same problems as mentioned above.

As a result of the present invention, the manufacturing process involving moulding is clearly improved since it introduces substantial modifications which avoid the drawbacks associated with the moulding process, such as, for example, the following:

1st) Difficulties in removing the mouldings on account of the need for using stripping machines, thereby making automatic operation difficult; sometimes the mouldings break.

2nd) Low output, since industrial products, like the products obtained according to the present invention, would require some tens of thousands of moulds, thereby increasing considerable the price of the finished product (moulds are extremely expensive to design and manufacture).

3rd) Moulds are difficult to clean since the product in question is a hard sweet; the mould must be completely clean before each new "dipping" of the mould is performed.

The difficulties described above are overcome by means of the present invention, since the latter or confectionary solution attempts to use conventional machines for forming, calibrating the caramel bar and stamping-out the sweet together, eventually, with introduction of a plastic stick, so that it is ready for selling.

These conventional machines have been the subject of detailed studies for many years and all of the mechanical problems have thus been overcome. Moreover, the outputs obtained using these machines are very high and it is possible to obtain a total quantity of approximately 1,000 mouldings per minute in a completely automatic manner.

Therefore, the cost of the finished products will certainly be less than the cost arising from the method of moulding, or of injecting, or of depositing.

There follows a list of references cited relating to the U.S. Patents.

REFERENCES CITED

| U.S. Patents | Name | Date | | |
|---|---|---|---|---|
| 581,206 | Hewitt | 20 Apr. | 1897 |
| 1,080,445 | Hey | 2 Dec. | 1913 |
| 1,384,319 | Heath | 12 July | 1921 |
| 1,471,697 | Kubes | 23 Oct. | 1923 |
| 1,670,593 | Miller | 22 May | 1928 |
| 1,855,670 | Greenwood | 26 Apr. | 1932 |
| 2,082,313 | Todd | 1 June | 1937 |
| 2,197,919 | Bowman | 23 Apr. | 1940 |
| 2,445,617 | Hofman | 20 July | 1948 |
| 2,600,569 | Oakes | 17 June | 1952 |
| 2,666,400 | Vogt | Jan. | 1954 |
| 2,713,253 | Chandler | July | 1955 |
| 3,012,893 | Kremzner | Dec. | 1961 |
| 3,068,105 | Morrison | Dec. | 1962 |
| 4,262,029 | Kleiner | Oct. | 1979 |
| 4,273,793 | Harry et al. | Oct. | 1976 |

The inventive idea which is the subject of the present invention is as follows:

Production, by a continuous and automatic process under pressure, of a caramel strip or bar of suitable composition and sugar content, sufficiently gasified, with successive calibration and stamping-out under suitable conditions of viscosity of the caramel mass itself, with conventional machinery already commercially available, located entirely in an environment at above atmospheric pressure.

The advantages which are derived are:

— increased rate of production and output;

— an almost infinite number of shapes in which the sweet can be stamped out, in contrast to the fact that some shapes cannot be produced with the methods of the prior art;

— lack of wastage;

— low cost of installation, machinery and moulds;

— greater competitiveness.

The sweet of the invention, due to the balance of various factors, such as the basic substance and sugar composition of the caramel layer, which is responsible for producing the fragility factor of the hard crust, as regards the more appropriately chemical aspect of the process on the one hand; and to the pressure of the occluded gas and to the amount of gas present on average in the bubbles, which determines the crackling, as regards the physicochemical aspect of the structure of the sweet on the other hand; gives rise to a special sensation of prolonged and continuous hissing caused by the snapping of the bubbles which become detached from the caramel mass as hard surface crust is ruptured, as a result of the correct relationship between the pressure of the occluded gas and the surface tension or rupture strength of the film of the sweet, as well as the amount of gas present on average in the bubbles, which also determines the diameter of the latter.

The hissing sensation, which is the effect of the combination between palate and ear, will be the product of an average of explosions and snappings in the mouth, according to a Gaussian probability curve.

More precisely the product of the process of the invention comprises a hard gasified sweet spherical in shape or of any other desired and predetermined regular or irregular shape, incorporating or not incorporating a stick, this stick being of plastic or any other material, capable of producing, when placed inside the mouth, a continuous and prolonged uniform, characteristic and pleasant hissing sensation as a result of the crackling caused by the blowing-out of the occluded gas, but without producing undue or

EP 0 194 282 B1

violent or excessively strong explosions, the sensation being similar to the snapping generated by the explosion of the bubbles in a gasified drink, characterised in that the same sizzling sensation, obtained by the rupture of the surface layer or film of the sweet due to the pressure of the gas bubbles dissolved in the caramel mass, is achieved as a result of an appropriate combination of the following factors:

— basic substance used in the preparation of the sweet;

— sugar composition of the film in the sweet, to determine the fragility of the hard crust;

— gas pressure;

— diameter of the bubbles in relation to the mass of gas present therein;

to determine the correct relationship between the pressure of the compressed gas and the surface tension or rupture strength of the caramel film, as well as the amount, by mass, of gas present in the bubbles.

The present invention refers to a process for making hard gasified sweets, comprising the steps of:

a) preparing a caramel mass, gasifying the mass and homogenising the mass in a pressurized environment,

b) forming a strip or bar of said caramel continuously and automatically in an environment at a high superatmospheric pressure,

c) continuously and automatically controlling the temperature of the strip or bar in an environment at a high superatmospheric pressure, enabling it to attain a satisfactory viscosity;

d) automatically and continuously stamping out said strip or bar by means of a stamping press in an environment at a high superatmospheric pressure, with a die having the shape or pattern which it is desired to obtain, optionally with the prior introduction of a stick into the die, in the case where it is wished to obtain a sweet incorporating a stick;

e) continuously and automatically cooling the resulting product in an environment at a high superatmospheric pressure with a coolant whose temperature is about −10°C;

f) the pressure range in the high superatmospheric pressure of steps (b) to (e) being between 40 and 80 atmospheres (40.52 and 81.06 bar); and

g) wrapping and packing the product by a method most relevant to the market for which the goods are intended.

The process consists in producing a liquid caramel mass (mixture of sugars) of specified composition, and gasifying it using the knowledge of the prior art, to draw out of this mass by extrusion a caramel strip or bar and obtain by calibration a suitable size and homogeneity for the strip or bar, in the pasty or semi-pasty state with suitable viscosity, that is to say with the consistency and plasticity properties required for successive stamping-out, with exact reproduction of the sweet in the desired shape. All of this takes place in an environment at above atmospheric pressure, in which all the machinery is installed.

It is only necessary to change the die in order to change the shape of the sweet which it is desired to obtain, an impossibility with the moulding or injection technique which requires the complete substitution of all the corresponding moulds, which constitutes an increase in price of the installation required or a limitation in the output with respect to diversification of the product. This is, in short, an almost intolerable cost in large scale production.

During the stamping-out, when it is desired to obtain the sweet with a stick, it will only be necessary to introduce a stick automatically into the die.

Once the product has been stamped out, it is cooled by conventional methods, using a coil operated continuously or a heat exchanger or cooling system, to a temperature of the order of 25°C or 30°C, which enables a consistency to be obtained which is quite sufficient to retain the occluded gas, preventing release of the latter.

If the temperature is higher, the gas passes through the layer, which does not have sufficient strength to retain this gas.

When the product is cooled and solidified, it is wrapped and packaged by the most relevant marketing methods, according to the use for which the goods are intended.

A typical embodiment concerning the manufacturing process is given on the following pages.

a) A gasified caramel bar is formed from a gasified caramel mass in the liquid or plastic state by means of an extruding machine or stick-making machine;

b) The caramel bar thus formed is calibrated by means of a boring machine (gauge) with a stick diameter between 0.5 to 20 cm, preferably between 1 and 4 cm;

c) During its entire preparative process the temperture of the caramel stick can vary between 30°C and 140°C and preferably between 50°C and 110°C;

d) During its entire preparative process, the caramel stick is subjected to a pressure which varies between 2 and 150 atmospheres and preferably between 10 and 80 atmospheres;

e) During the process for preparing the caramel stick, the latter is located inside certain containers which have been prepared in a conventional manner so as to be able to withstand pressures higher than atmospheric pressure;

j) The sweet is stamped out and a plastic stick is introduced into the mass by means of a stamping press, which is located inside a container under a pressure between 2 and 150 atmospheres and preferably between 10 and 80 atmospheres;

k) The gasified sweet incorporating a plastic stick is subjected to cooling inside a container under

5

pressure (between 2 and 150 atmospheres and preferably between 10 and 80 atmospheres), at temperatures lower than 30°C and preferably at −10°C;

## Example

A gasified caramel mass (25 kg minimum) which has a temperature of 100°C is introduced into the pressure container which is already pressurised under the same pressure as that required for the gasified caramel and in which a conventional stick-making or extruding machine is already installed. According to this process, the caramel mass acquires the shape of a stick or bar or rod with a diameter of approximately 3 cm and at a temperature of 60°C.

The outlet duct of this stick-making machine is connected to another container which is also pressurised and in which a calibrating or boring machine (gauge) with the cooling system is installed, which machine provides an exact diameter of 2.5 cm and a temperature of 55°C and the caramel mass attains the necessary consistency and plasticity.

Once the calibrated and hardened caramel bar has been formed, this caramel bar is passed via a suitable duct to another container which is under the same pressure and stamped out by means of a stamping press with introduction of the plastic sticks in the die automatically. The caramel stick which is already stamped out is passed into a container which is pressurised under the same pressure and cooled at −10°C. After 4 hours, the containers which receive the gasified caramel incorporating a stick are depressurised, and the sweets are subsequently removed from them for packing.

Complete crystallisation of the sweet by means of an internal temperature lower than 25°C is very important, since the film which covers the gas bubbles will otherwise not be strong enough to retain the bubbles and will therefore release the occluded gas.

This example is given solely by way of illustration and is non-limiting.

## Claims

1. Process for making hard gasified sweets, comprising the steps of:
a) preparing a caramel mass, gasifying the mass and homogenising the mass in a pressurized environment,
b) forming a strip or bar of said caramel continuously and automatically in an environment at a high superatmospheric pressure,
c) continuously and automatically controlling the temperature of the strip or bar in an environment at a high superatmospheric pressure, enabling it to attain a satisfactory viscosity;
d) automatically and continuously stamping out said strip or bar by means of a stamping press in an environment at a high superatmospheric pressure, with a die having the shape or pattern which it is desired to obtain, optionally with the prior introduction of a stick into the die, in the case where it is wished to obtain a sweet incorporating a stick;
e) continuously and automatically cooling the resulting product in an environment at a high superatmospheric pressure with a coolant whose temperature is about −10°C;
f) the pressure range in the high superatmospheric pressure of steps (b) to (e) being between 40 and 80 atmospheres (40.52 and 81.06 bar); and
g) wrapping and packing the product by a method most relevant to the market for which the goods are intended.

2. Process as claimed in Claim 1, wherein machines, namely extruding machine, boring machine, stamping press, and cooling system, are used in steps (b), (c), (d) and (e) in an environment at a high superatmospheric pressure.

3. Process as claimed in Claims 1 or 2, wherein the diameter of the caramel strip or bar varies between 0.5 and 20 cm.

4. Process as claimed in Claim 3, wherein the diameter is between 1 and 4 cm.

5. Process as claimed in Claim 2, 3 or 4, wherein the temperature of the caramel strip or bar varies between 30°C and 140°C.

6. Process as claimed in Claim 5, wherein the temperature is between 50°C and 110°C.

7. Process according to any one of Claims 1 to 6, wherein a gasified sweet incorporating a stick is obtained by means of insertion of the stick into the die during the stamping-out phase.

## Patentansprüche

1. Herstellungsverfahren von harten vergasten Karamellen, das die folgenden Phasen enthält:
a) Vorbereitung einer Masse von Karamel, Vergasung der Masse und Homogenisierung der Masse in einer Umgebung unter Druck.
b) Ununterbrochene und automatische Bildung eines Streifes oder Stabes des genannten Karamels in einer Umgebung unter hohem, über dem atmosphärischen, Druck.
c) Ununterbrochene und automatische Regelung der Temperatur des Streifes oder Stabes, die dem Streif oder Stab erlaubt, eine angemessene Viskosität zu erreichen, in einer Umgebung unter hohem, über dem atmosphärischen, Druck.

d) Automatisches und ununterbrochenes Pressen des genannten Streifes oder Stabes durch eine Gesenkpresse in einer Umgebung unter hohem, über dem atmosphärischen Druck, mit einer Matrize, die die erwünschte Form und Muster hat, beliebig mit der vorherigen Einführung eines Stäbchens in die Matrize, falls man eine Karamelle mit eingegliedertem Stäbchen erzeugen wünscht.

e) Ununterbrochene und automatische Kühlung des Erzeugnisses in einer Umgebung unter hohem, über dem atmosphärischen, Druck durch eine Kühlmittel, dessen Temperatur etwas −10°C ist.

f) Der Bereich des hohen Druckes der Phasen von (b) bis (e) soll zwischen 40 und 80 atm (40.52 und 81.06 bar) sein.

g) Verpackung des Erzeugnisses gemäß dem Bestimmungsmarkt.

2. Verfahren gemäß dem Anspruch 1, in dem die Maschinen (d.h. Strangpresse, Bohrmaschine, Gesenkpresse und Kühlsystem) in der Phasen (b), (c), (d) und (e) in einer Umgebung unter hohem, über dem atmosphärischen, Druck benutzt werden.

3. Verfahren gemäß dem Anspruch 1 oder 2, in dem der Durchmesser des Streifes oder Stabes von Karamel zwischen 0.5 und 20 cm schwankt.

4. Verfahren gemäß dem Anspruch 3, in dem der Durchmesser zwischen 1 und 4 cm schwankt.

5. Verfahren gemäß dem Anspruch 2 oder 3 oder 4, in dem die Temperatur des Streifes oder Stabes zwischen 30 und 140°C schwankt.

6. Verfahren gemäß dem Anspruch 5, in dem die Temperatur zwischen 50 und 110°C schwankt.

7. Verfahren gemäß einem beliebigen Anspruch von 1 bis 6, in dem eine vergaste Karamelle mit einem eingegliederten Stäbchen durch der Einführung des Stäbchen während des Pressens erzeugt wird.

**Revendications**

1. Procédé pour réaliser des bonbons durs gaséifiés, comprenant les phases suivantes:

a) Préparation d'une masse de caramel, gazéification de la masse et homogénéisation de la masse dans un milieu sous pression.

b) Formation d'une bande ou barre du susdit caramel continuellement et automatiquement dans un milieu sous haut pression, superieure à la pression atmosphérique.

c) Contrôle continu et automatique de la température de la bande ou barre dans un milieu sous haute pression superieure à la pression atmosphérique, qui lui permet d'atteindre une viscosité satisfaisante.

d) Estampage automatique et continue de la susdite bande ou barre au moyen d'une presse à estamper dans un milieu sous haute pression, superieure à la pression atmosphérique, avec un matrice ayant la forme et le dessin que l'on veut obtenir, au choix avec l'introduction précédente d'un batonnet dans la matrice dans le cas où l'on veut obtenir un bonbon incorporant un bâtonnet.

e) Refroidissement continu et automatique du produit résultant dans un milieu sous haute pression superieur à la pression atmosphérique avec un réfrigérant dont la température soit à peu près −10°C.

f) Le domaine de variation de l'haute pression des phases de (b) à (e) sera compris entre 40 et 80 atm (40,52 et 81.06 bar).

g) Confection du produit selon le marché de destination.

2. Procédé d'après la revendication 1, où les machines (c'est-à-dire presse d'extrusion, aléseuse, presse à estamper et système de refroidissement sont employés dans les phases (b), (c), (d) et (e) dans un milieu sous haut pression superieure à la pression atmosphérique.

3. Procédé d'après la revendication 1 ou 2, où le diamètre de la bande ou barre de caramel varie entre 0.5 et 20 cm.

4. Procédé d'après la revendication 3, où le diamètre est entre 1 et 4 cm.

5. Procédé d'après la revendication 2, 3 ou 4, où la température de la bande ou barre de caramel varie entre 30 et 140°C.

6. Procédé d'après la revendication 5, où la température est entre 50 et 110°C.

7. Procédé d'après une quelconque des revendications de 1 à 6, où un bonbon gazéifié incorporant un bâtonnet est obtenu par l'insertion du bâtonnet dans la matrice durant la phase d'estampage.